# EUROPEAN PATENT APPLICATION

(11) **EP 4 741 041 A1**
(43) Date of publication of application: **13.05.2026**
(21) Application number: 24890095.3
(22) Date of filing: 17.06.2024
(51) Int. Cl.: B01D 53/00

(54) **INDEPENDENT PURIFICATION DEVICE AND RANGE HOOD**

(30) Priority: 17.11.2023 CN 202323121762 U
(71) Applicant: Guangdong Arcair Appliance Co., Ltd., Guangdong 528318 (CN)
(72) Inventor: KANG, Zuotian, Foshan, Guangdong 528318 (CN); TANG, Haijiang, Foshan, Guangdong 528318 (CN); LIANG, Haisheng, Foshan, Guangdong 528318 (CN)
(74) Representative: Murgitroyd & Company
(86) International application number: PCT/CN2024/099628
(87) International publication number: WO 2025/102726

(57) **Abstract**

There is provided an independent purification device and a range hood. The range hood includes an air outlet pipe (700). An independent purification device is movably inserted into an air outlet of the air outlet pipe (700). The independent purification device includes a housing (100), a purification filter screen (200), an ionization ozone generator (300) and a UV lamp (400). When the oil fume enters the first filter screen (210), ozone, sulfur dioxide and ammonia gas undergo oxidation and separation to remove odors. When the oil fume enters the air channel (103), the ionization ozone generator (300) removes hazardous substances, bacteria and odors in the air. When the oil fume flows through the UV lamp (400), poisonous substances and bacteria in the air can be additionally removed. Finally, when the oil fume flows through the second filter screen (220), the odorous molecules such as excess ozone, sulfur dioxide and ammonia gas in the air can be further oxidized and separated so as to exhaust clean and fresh air, achieving good filtering purifying effect. After a long time of use, the independent purification device can be easily dismounted and changed, improving the purifying effect.

## Description

### TECHNICAL FIELD

The present disclosure relates to the technical field of range hoods, and in particular to an independent purification device and a range hood.

### BACKGROUND

The range hoods are a common appliance in kitchens and the oil fume purifiers can purify oil fume to remove hazardous substances in the oil fume. For example, the substances such as PM2.5, benzene and bacteria in the oil fume can be removed by the oil fume purifiers to make the gases exhausted by the oil fume purifiers cleaner and safer. However, the existing oil fume purifiers are usually integrated with the range hoods, making it impossible to change the oil fume purifiers over a long time of use, thereby affecting purification effect and lowering the user experience.

### SUMMARY

The present disclosure aims to at least address one of the technical problems in the prior arts. For this reason, a first embodiment of the present disclosure provides an independent purification device, including a housing, a purification filter screen, an ionization ozone generator and a UV lamp. The housing is provided with an air inlet end and an air outlet end, and an air channel is provided between the air inlet end and the air outlet end. The purification filter screen includes a first filter screen and a second filter screen, the first filter screen is mounted in the air inlet end and the second filter screen is mounted in the air outlet end. The ionization ozone generator is mounted inside the housing to release ozone into an inner chamber of the housing. The UV lamp is mounted inside the housing to irradiate ultraviolet light into the inner chamber of the housing.

The present disclosure at least has the following beneficial effects.

When the oil fume runs through the first filter screen, the odorous molecules such as ozone, sulfur dioxide, and ammonia gas and the like in the air are concentrated on a surface of a molecular sieve and undergo oxidation and separation, so as to remove the odors. After the oil fume enters the air channel, the ionization ozone generator removes hazardous substances, bacteria and odors in the air. The oil fume then runs through the UV lamp with a wavelength of 254nm, and the UV lamp additionally removes poisonous substances and bacteria in the air and synchronously decomposes the excess ozone generated by the high-voltage ionizing generator. Finally, the oil fume then runs through the second filter screen, and the odorous molecules such as excess ozone, sulfur dioxide and ammonia gas and so on in the air are further concentrated on a surface of a molecular sieve and undergo oxidation and separation, so as to exhaust clean and fresh air, achieving good filtering and purifying effects.

According to some embodiments of the present disclosure, the device further includes an air pressure sensor. The air pressure sensor protrudes toward the air channel, the air pressure sensor is mounted at a side of the air inlet end, and the air pressure sensor is in controlled connection with the ionization ozone generator and the UV lamp.

According to some embodiments of the present disclosure, the air pressure sensor, the ionization ozone generator and the UV lamp are put into an electric control protection box which is disposed respectively on both sides of the air channel.

According to some embodiments of the present disclosure, the electric control protection box includes a first mounting chamber and a second mounting chamber; a first window facing toward the air channel is opened on the first mounting chamber, and a second window facing toward the air channel is opened on the second mounting chamber.

According to some embodiments of the present disclosure, the ionization ozone generator is mounted in the first mounting chamber.

According to some embodiments of the present disclosure, the UV lamp is mounted in the second mounting chamber.

According to some embodiments of the present disclosure, a connection lug is disposed symmetrically on the second filter screen, and the connection lugs are located on the air outlet end.

According to some embodiments of the present disclosure, the first filter screen is filled with a zeolite filtering molecular sieve.

According to some embodiments of the present disclosure, the second filter screen is filled with a honeycomb-type activated carbon molecular sieve.

According to a second embodiment of the present disclosure, there is provided a range hood, including an air outlet pipe. An independent purification device is movably inserted into an air outlet of the air outlet pipe, and the independent purification device is the above independent purification device.

The present disclosure at least has the following beneficial effects.

When the independent purification device is movably inserted into the air outlet of the air outlet pipe, it can be easily dismounted and changed over a long time of use, so as to improve the purifying effect and user experience.

The additional aspects and advantages of the present disclosure will be partly given in the following descriptions and partly become obvious from the following descriptions or be understood from the practice of the present disclosure.

### BRIEF DESCRIPTION OF THE DRAWINGS

The above and/or additional aspects and advantages of the present disclosure will become obvious and understandable in the descriptions made to the embodiments in combination with following drawings.
FIG. 1 is an exploded view 1 of a use state of an independent purification device according to the present disclosure.
FIG. 2 is an exploded view 2 of a use state of an independent purification device according to the present disclosure.
FIG. 3 is a schematic diagram of an independent purification device according to an embodiment of the present disclosure.
FIG. 4 is a schematic diagram of an electric control protection box according to an embodiment of the present disclosure.

### DETAILED DESCRIPTION OF THE EMBODIMENTS

The embodiments of the present disclosure will be detailed below, with the examples of the embodiments illustrated in the drawings. Same or like numerals represent same or like elements or elements with same or like functions throughout the specification. The embodiments described below by referring to the drawings below are illustrative and used only to interpret the present disclosure and shall not be understood as limiting of the present disclosure.

In the descriptions of the present disclosure, it should be understood that, in case of orientation description, the orientations or positional relationships indicated, for example, by up, down, front, rear, left and right and the like are based on the orientations or positional relationships shown in the drawings, and are only used to facilitate the descriptions of the present disclosure or simplified descriptions rather than indicate or imply the indicated device or element must have a specific orientation or be constructed and operated in a specific orientation and therefore shall not be understood as limiting of the present disclosure.

In the descriptions of the present disclosure, plural means two or more and such phrases as greater than, smaller than and more than and the like are understood as excluding the present number. The first and the second are described only to distinguish technical features and shall not be understood as indicating or implying relative importance or indicating implicitly the number of the indicated technical features or indicating implicitly a precedence of the indicated technical features.

In the descriptions of the present disclosure, unless otherwise stated clearly, the terms such as setting, mounting and connection and so on shall be understood in broad sense, and those skilled in the arts can reasonably determine the specific meaning of the above terms in the present disclosure based on the specific contents of the technical solutions.

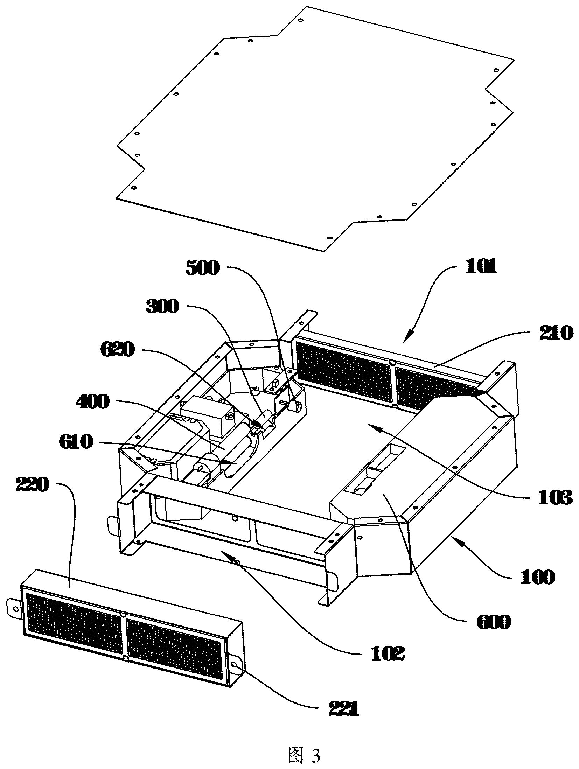

With reference to FIG. 3, there is provided an independent purification device, including a housing 100, a purification filter screen 200, an ionization ozone generator 300 and a UV lamp 400. The housing 100 is provided with an air inlet end 101 and an air outlet end 102, and an air channel 103 is provided between the air inlet end 101 and the air outlet end 102. The purification filter screen 200 includes a first filter screen 210 and a second filter screen 220, the first filter screen 210 is mounted in the air inlet end 101 and the second filter screen 220 is mounted in the air outlet end 102. The ionization ozone generator 300 is mounted inside the housing 100 to release ozone into an inner chamber of the housing 100. The UV lamp 400 is mounted inside the housing 100 to irradiate ultraviolet light into the inner chamber of the housing 100.

When the oil fume runs through the first filter screen 210, the odorous molecules such as ozone, sulfur dioxide, and ammonia gas and the like in the air are concentrated on a surface of a molecular sieve and undergo oxidation and separation, so as to remove the odors. After the oil fume enters the air channel 103, the ionization ozone generator 300 removes hazardous substances, bacteria and odors in the air. The oil fume then runs through the UV lamp with a wavelength of 254nm, and the UV lamp additionally removes poisonous substances and bacteria in the air and synchronously decomposes the excess ozone generated by the high-voltage ionization generator. Finally, the oil fume then runs through the second filter screen 220, and the odorous molecules such as excess ozone, sulfur dioxide and ammonia gas and so on in the air are further concentrated on a surface of a molecular sieve and undergo oxidation and separation, so as to exhaust clean and fresh air, achieving good filtering and purifying effects.

With reference to FIG. 3, an air pressure sensor 500 is mounted at a side of the air inlet end 101, and the air pressure sensor 500 is in controlled connection with the ionization ozone generator 300 and the UV lamp 400. When a range hood is started, if the air pressure sensor 500 monitors an air pressure increases, the ionization ozone generator 300 and the UV lamp 400 are automatically turned on.

Specifically, the air pressure sensor 500, the ionization ozone generator 300 and the UV lamp 400 are put into an electric control protection box 600 which is disposed respectively on both sides of the air channel 103.

Specifically, the electric control protection box 600 includes a first mounting chamber 610 and a second mounting chamber 620. A first window 611 facing toward the air channel 103 is opened on the first mounting chamber 610, and a second window 621 facing toward the air channel 103 is opened on the second mounting chamber 620.

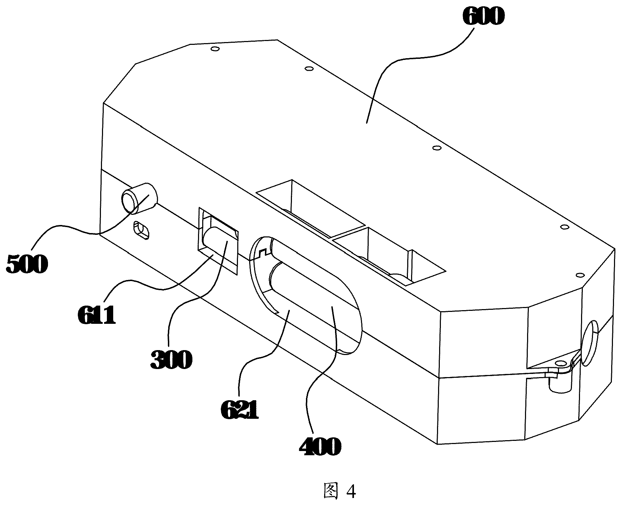

With reference to FIGS. 3 and 4, the ionization ozone generator 300 is mounted in the first mounting chamber 610, and the ozone generated by the ionization ozone generator 300 enters the air channel 103 through the first window 611. Ozone is a strong oxidant capable of damaging and decomposing cell walls of the bacteria to diffuse into the cells and oxidize and decompose glucose oxidase and so on required by the bacteria to oxidize glucose, and also directly acting on the bacteria and viruses to damage metabolism and reproduction process of the bacteria. Furthermore, ozone can decompose those odorous gases such as ammonia gas, benzene and hydrogen sulfide so as to remove the odors. The ozone features short time and strong effect in sterilization, disinfection and deodorization.

The UV lamp 400 is mounted in the second mounting chamber 620. The ultraviolet light generated by the UV lamp 400 is irradiated into the air channel 103 through the second window 621. The ultraviolet light can be easily absorbed by organisms and act on the DNA of the organisms, causing the DNA to be damaged and thus the bacteria to be killed, effectively killing the bacteria. Therefore, the ultraviolet light can be concentrated to a very high intensity to kill bacteria and viruses in short time. The sterilization of the ultraviolet light is a purely physical disinfection method, leading to no secondary pollution.

In addition, the ultraviolet light can also accelerate ozone decomposition and improve oxidizing ability. After an air current undergoes high-voltage ionizing deodorization by the ozone generator, the gas with ozone is under the synergic action of ultraviolet light so that hydroxyl radicals are formed, effectively damaging the molecular structure of the organic substances and finally decomposing ozone.

Secondly, the normal working temperature of the UV lamp 400 is 60°C. This temperature has a drying effect on the greasy air flowing through so as to well remove moisture and grease in the air.

In order to help fixedly mount the device, a connection lug 221 is disposed symmetrically on the second filter screen 220. The device is connected with the range hood by the lugs 221. The connection lugs 221 are located on the air outlet end 102.

Specifically, the first filter screen 210 is filled with a zeolite filtering molecular sieve, for example, ZSM-5; the second filter screen 220 is filled with a honeycomb-type activated carbon molecular sieve.

Firstly, the zeolite filtering molecular sieve is an inorganic crystal material featuring regular tunnel structure, strong acidity and high hydrothermal stability. The zeolite filtering molecular sieve has many holes with uniform size distributed in middle, and screens various fluid molecules based on its effective hole sizes. When the gas with ozone and odor flows through, some ozone and odor molecules in the air make irregular movement to hit the surface of the molecular sieve and are adsorbed onto the surface, leading to molecule concentration on the surface. Furthermore, under the action of a catalyst, the molecules are decomposed and catalyzed, so as to achieve the purpose of removing ozone and odors. In addition, the zeolite filtering molecular sieve features water resistance, acid-base resistance, corrosion resistance and high-temperature resistance and so on and therefore can be applied to various environments. Also, its greases, dusts and dirts and so on can be removed by water and detergents with different compositions. Moreover, it can also be naturally dried in a well -ventilated sunny site or baked at high temperature, without limitation of baking temperature, time and device. The consumers can practice based on their own situations, for example, can set a household oven to a temperature of 50°C to 200°C with a time set to 10 minutes to 120 minutes. The baked zeolite filtering molecular sieve has an increased ability in adsorption, decomposition, catalysis, and regeneration of odorous molecules, and thus has an increased ability in odor removal, achieving the effect of continuous repetition and permanent use and bringing much convenience and environmental protection.

Secondly, the honeycomb-type activated carbon molecular sieve can also effectively remove hazardous gases, odors and pollutants such as sulfide, ammonia gas and formaldehyde and so on in the air. Furthermore, the second filter screen 220 is detachably mounted at the air outlet end 102, helping quickly remove the air outlet end 102. The honeycomb-type activated carbon molecular sieve in the second filter screen 220 can be cleaned and baked and the like to extend its service life, or can be changed irregularly, bringing much convenience to operation, making it cleaner and fresher, and catering to the use needs of the consumers.

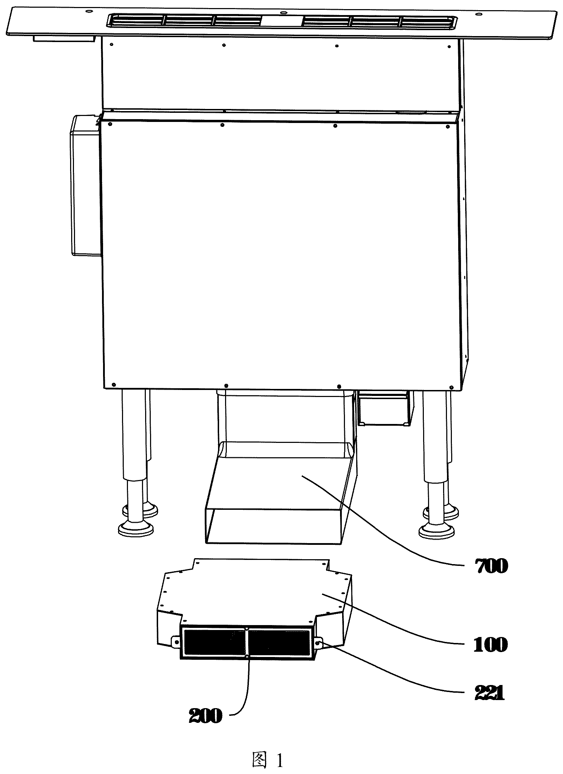

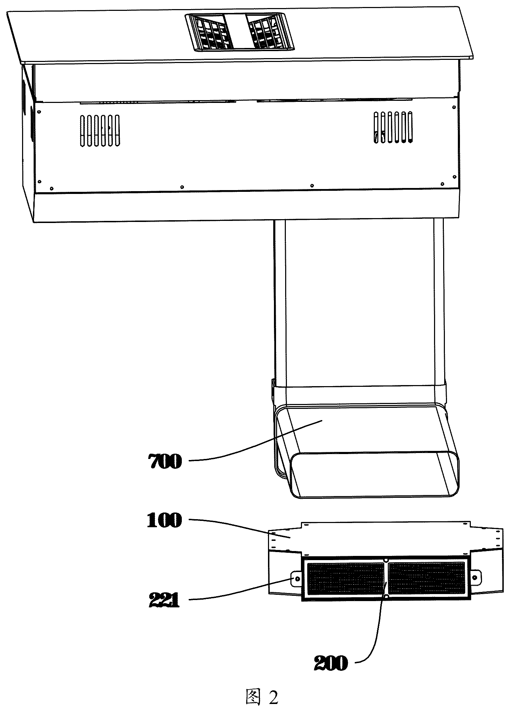

With reference to FIGS. 1 and 2, there is provided a range hood, which is an integrated range hood or embedded range hood, including an air outlet pipe 700. An independent purification device is movably inserted into an air outlet of the air outlet pipe 700. The independent purification device is the above independent purification device. When the independent purification device is movably inserted into the air outlet of the air outlet pipe 700, it can be easily dismounted and changed over a long time of use, so as to improve the purifying effect and user experience.

The air inlet end 101 of the independent purification device can be adapted based on a shape size of the air outlet of the air outlet pipe 700, and the air outlet end 102 of the independent purification device can also be adapted based on requirements of kitchen cupboard.

In the descriptions of the present disclosure, the descriptions made by referring to terms "some embodiments" or "what is conceived of" or the like mean that the specific features, structures, materials or characteristics described in combination with the embodiment or example are included in at least one embodiment or example of the present disclosure. In the present disclosure, the illustrative expressions for the above terms do not necessarily refer to same embodiment or example. Furthermore, the described specific features, structures, materials or characteristics can be combined properly in one or more embodiments or examples.

Detailed descriptions are made to the embodiments of the present disclosure in combination with drawings as above, but the present disclosure is not limited to the above embodiments. Persons of ordinary skill in the arts can, within their knowledge, make various changes without departing from the principle of the present disclosure.

## Claims

1. An independent purification device, comprising:
a housing (100), wherein the housing (100) is provided with an air inlet end (101) and an air outlet end (102), and an air channel (103) is provided between the air inlet end (101) and the air outlet end (102);
a purification filter screen (200), wherein the purification filter screen (200) comprises a first filter screen (210) and a second filter screen (220), the first filter screen (210) is mounted in the air inlet end (101) and the second filter screen (220) is mounted in the air outlet end (102);
an ionization ozone generator (300), wherein the ionization ozone generator (300) is mounted inside the housing (100) to release ozone into an inner chamber of the housing (100);
a UV lamp (400), wherein the UV lamp 400 is mounted inside the housing (100) to irradiate ultraviolet light into the inner chamber of the housing (100).

2. The independent purification device according to claim 1, further comprising an air pressure sensor (500), wherein the air pressure sensor (500) protrudes toward the air channel (103), the air pressure sensor (500) is mounted at a side of the air inlet end (101), and the air pressure sensor (500) is in controlled connection with the ionization ozone generator (300) and the UV lamp (400).

3. The independent purification device according to claim 2, wherein the air pressure sensor (500), the ionization ozone generator (300) and the UV lamp (400) are put into an electric control protection box (600) which is disposed respectively on both sides of the air channel (103).

4. The independent purification device according to claim 3, wherein the electric control protection box (600) comprises a first mounting chamber (610) and a second mounting chamber (620); a first window (611) facing toward the air channel (103) is opened on the first mounting chamber (610), and a second window (621) facing toward the air channel (103) is opened on the second mounting chamber (620).

5. The independent purification device according to claim 4, wherein the ionization ozone generator (300) is mounted in the first mounting chamber (610).

6. The independent purification device according to claim 4, wherein the UV lamp (400) is mounted in the second mounting chamber (620).

7. The independent purification device according to claim 1, wherein a connection lug (221) is disposed symmetrically on the second filter screen (220), and the connection lugs (221) are located on the air outlet end (102).

8. The independent purification device according to claim 1, wherein the first filter screen (210) is filled with a zeolite filtering molecular sieve.

9. The independent purification device according to claim 1, wherein the second filter screen (220) is filled with a honeycomb-type activated carbon molecular sieve.

10. A range hood, comprising an air outlet pipe (700), wherein an independent purification device is movably inserted into an air outlet of the air outlet pipe (700), and the independent purification device is the independent purification device according to any one of claims 1 to 9.
